(19) Europäisches Patentamt / European Patent Office / Office européen des brevets

(11) **EP 3 488 650 B1**

(12) **EUROPEAN PATENT SPECIFICATION**

(45) Date of publication and mention
of the grant of the patent:
**26.05.2021 Bulletin 2021/21**

(21) Application number: **18761004.3**

(22) Date of filing: **07.02.2018**

(51) Int Cl.:
**H04L 5/00** (2006.01)        **H04W 72/04** (2009.01)

(86) International application number:
**PCT/CN2018/075639**

(87) International publication number:
**WO 2018/157714 (07.09.2018 Gazette 2018/36)**

(54) **NETWORK NODE AND USER DEVICE FOR WIRELESS COMMUNICATION SYSTEM**

NETZWERKKNOTEN UND BENUTZERVORRICHTUNG FÜR EIN DRAHTLOSKOMMUNIKATIONSSYSTEM

NOEUD DE RÉSEAU ET DISPOSITIF UTILISATEUR POUR SYSTÈME DE COMMUNICATION SANS FIL

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 02.03.2017 US 201762466077 P
02.05.2017 US 201762500146 P

(43) Date of publication of application:
**29.05.2019 Bulletin 2019/22**

(73) Proprietor: **GUANGDONG OPPO MOBILE TELECOMMUNICATIONS CORP., LTD.**
**Wusha, Chang'an**
**Dongguan,**
**Guangdong 523860 (CN)**

(72) Inventor: **XU, Hua**
**Ottawa, Ontario K2M1N6 (CA)**

(74) Representative: **Manitz Finsterwald**
**Patent- und Rechtsanwaltspartnerschaft mbB**
**Martin-Greif-Strasse 1**
**80336 München (DE)**

(56) References cited:
EP-A1- 3 566 381        CN-A- 102 255 688
CN-A- 102 368 871        CN-A- 102 904 666

• HUAWEI ET AL: "Nested structure for search space design", 3GPP DRAFT; R1-1701639, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051208806, Retrieved from the Internet: URL:http://www.3gpp.org/ftp/Meetings_3GPP_ SYNC/RAN1/Docs/ [retrieved on 2017-02-12]
• MITSUBISHI ELECTRIC: "On DL control channel design", 3GPP DRAFT; R1-1700305_DLCONT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. SPOKANE, WA; 20170116 - 20170120 16 January 2017 (2017-01-16), XP051207843, Retrieved from the Internet: URL:http://www.3gpp.org/ftp/Meetings_3GPP_ SYNC/RAN1/Docs/ [retrieved on 2017-01-16]
• GUANGDONG OPPO MOBILE TELECOM: "Discussion of search space design", 3GPP TSG RAN WGI Meeting NR#3 R1-1715686, 21 September 2017 (2017-09-21), XP051329138,
• OPPO: "Discussion of search space design", 3GPP TSG RAN WGI Meeting #90bis R1-1718043, 13 October 2017 (2017-10-13), XP051341225,
• LG ELECTRONICS: "Corrections to EPDCCH search space", 3GPP TSG RAN WG1 Meeting #72 RI-130246, 1 February 2013 (2013-02-01), XP050663613,

**Description**

Field of the Disclosure

The present disclosure relates to the field of communication systems, and more particularly, to a network node, a user device, and a method for a wireless communication system.

Description of the Related Art

In long term evolution (LTE), a physical channel of the LTE can be classified into a downlink channel, i.e., a physical downlink shared channel (PDSCH) and a physical downlink control channel (PDCCH), and an uplink channel, i.e., a physical uplink shared channel (PUSCH) and a physical uplink control channel (PUCCH).
The PDCCH is used to transfer downlink control information that informs a user device about resource allocations or scheduling related to downlink resource assignments on the PDSCH, uplink resource grants, and uplink power control commands.
PDCCH signal is designed to be demodulated at the user device based on a cell specific reference signal (CRS). However, use of the CRS does not take into account of increased complexities of the LTE systems. The use of the cell specific reference signal can limit advanced techniques to increase cell capacity.
HUAWEI ET AL: "Nested structure for search space design", R1-1701639, published on 12 February 2017, discloses a nested structure for search space design.
MITSUBISHI ELECTRIC: "On DL control channel design", R1-1700305, published on 16 January 2017, discloses on DL control channel design.

SUMMARY

The present invention is defined in the appended independent claims.
An object of the present disclosure is to propose a network node, a user device, and a method for a wireless communication system to balance between channel estimation performance.
In a first aspect of the present disclosure, a network node for a wireless communication system includes a processor and a transceiver. The processor is configured to allocate a plurality of control channel elements (CCEs) for a physical downlink control channel (PDCCH) having PDCCH candidates defined for a plurality of different CCE aggregation levels (ALs). A number of CCEs is defined by the different CCE ALs. The CCEs are allocated to a user device. The processor is configured to form at least one search space block containing the CCEs of different CCE ALs, the at least one search space block is in a nested structure to carry PDCCH candidates with the different CCE ALs. The transceiver is configured to transmit the PDCCH on allocated CCEs in the at least one search space block to the user device.
According to an embodiment in conjunction with the first aspect of the present disclosure, the processor is configured to determine start positions of the at least one search space block and the processor is configured to determine locations of the PDCCH candidates of the different CCE ALs within the at least one search space block.
According to an embodiment in conjunction with the first aspect of the present disclosure, the processor is configured to determine start positions of the PDCCH candidates within the at least one search space block based on at least one of an output of a first hashing function, a first offset, and a bit-map.
According to an embodiment in conjunction with the first aspect of the present disclosure, the inputs of the first hashing function include at least one of the identity of the user device and a slot/symbol index.
According to an embodiment in conjunction with the first aspect of the present disclosure, the first hashing function is used in conjunction with a second offset.
According to an embodiment in conjunction with the first aspect of the present disclosure, the processor is configured to determine the start positions of the at least one search space block using at least one of an output of a second hashing function, a third offset, and a bit-map configuration to the user device.
According to an embodiment in conjunction with the first aspect of the present disclosure, the processor is configured to shift the start positions of the at least one search space block by an offset.
According to an embodiment in conjunction with the first aspect of the present disclosure, the search space blocks are located contiguously over time of a control region.
According to an embodiment in conjunction with the first aspect of the present disclosure, the search space blocks are located contiguously over frequency of a control region.
According to an embodiment in conjunction with the first aspect of the present disclosure, the search space blocks are distributed over time of a control region.
According to an embodiment in conjunction with the first aspect of the present disclosure, the search space blocks are distributed over frequency of a control region.

According to an embodiment in conjunction with the first aspect of the present disclosure, the search space blocks have different sizes.

According to an embodiment in conjunction with the first aspect of the present disclosure, a number of PDCCH candidates of each CCE AL in a search space blocks are configured.

According to an embodiment in conjunction with the first aspect of the present disclosure, the processor is configured to map the CCEs of the PDCCH candidates onto frequency in a distributed manner.

According to an embodiment in conjunction with the first aspect of the present disclosure, the processor is configured to map the CCEs of the PDCCH candidates onto time in a contiguous manner.

According to an embodiment in conjunction with the first aspect of the present disclosure, the CCEs include a plurality of resource element groups (REGs), wherein the CCE is a mapping unit of the PDCCH candidates, and the processor is configured to map the REGs on contiguous resources.

In a second aspect of the present disclosure, a user device for a wireless communication system includes a processor and a transceiver. The processor is configured to determine a plurality of control channel elements (CCEs) for at least one network node. The transceiver is configured to transmit the CCEs in a physical downlink control channel (PDCCH) to the at least one network node. The CCEs are allocated for the PDCCH having PDCCH candidates defined for a plurality of different CCE aggregation levels (ALs). A number of CCEs is defined by the different CCE ALs. The CCEs are associated with a user device. The processor is configured to form at least one search space block containing the CCEs of different CCE ALs. The at least one search space block is in a nested structure to carry PDCCH candidates with the different CCE ALs.

According to another embodiment in conjunction with the second aspect of the present disclosure, the processor is configured to determine start positions of the at least one search space block, and the processor is configured to determine locations of the PDCCH candidates of the different CCE ALs within the at least one search space block.

According to another embodiment in conjunction with the second aspect of the present disclosure, the processor is configured to determine start positions of the PDCCH candidates within the at least one search space block based on at least one of an output of a first hashing function, a first offset, and a bit-map.

According to another embodiment in conjunction with the second aspect of the present disclosure, the at least one search space block based on at least one of an output of a first hashing function, a first offset, and a bit-map.

According to another embodiment in conjunction with the second aspect of the present disclosure, the inputs of the first hashing function include at least one of the identity of the user device and a slot/symbol index.

According to another embodiment in conjunction with the second aspect of the present disclosure, the first hashing function is used in conjunction with a second offset.

According to another embodiment in conjunction with the second aspect of the present disclosure, the processor is configured to determine the start positions of the at least one search space block using at least one of an output of a second hashing function, a third offset, and a bit-map configuration to the user device.

According to another embodiment in conjunction with the second aspect of the present disclosure, the processor is configured to shift the start positions of the at least one search space block by an offset.

According to another embodiment in conjunction with the second aspect of the present disclosure, the search space blocks are located contiguously over time of a control region.

According to another embodiment in conjunction with the second aspect of the present disclosure, the search space blocks are located contiguously over frequency of a control region.

According to another embodiment in conjunction with the second aspect of the present disclosure, the search space blocks are distributed over time of a control region.

According to another embodiment in conjunction with the second aspect of the present disclosure, the search space blocks are distributed over frequency of a control region.

According to another embodiment in conjunction with the second aspect of the present disclosure, the search space blocks have different sizes.

According to another embodiment in conjunction with the second aspect of the present disclosure, a number of PDCCH candidates of each CCE AL in a search space blocks are configured.

According to another embodiment in conjunction with the second aspect of the present disclosure, the processor is configured to map the CCEs of the PDCCH candidates onto frequency in a distributed manner.

According to another embodiment in conjunction with the second aspect of the present disclosure, the processor is configured to map the CCEs of the PDCCH candidates onto time in a contiguous manner.

According to another embodiment in conjunction with the second aspect of the present disclosure, the CCEs include a plurality of resource element groups (REGs), wherein the CCE is a mapping unit of the PDCCH candidates, and the processor is configured to map the REGs on contiguous resources.

In a third aspect of the present disclosure, a method for a wireless communication system includes allocating a plurality of control channel elements (CCEs) on a physical downlink control channel (PDCCH) having PDCCH candidates defined for a plurality of different CCE aggregation levels (ALs) and transmitting the PDCCH on allocated CCEs in the at least one search space block to the user device. A number of CCEs is defined by the different CCE ALs. The CCEs are allocated to a user device. The method further includes forming at least one search space block containing the CCEs of different CCE ALs. The at least one search space block is in a nested structure to carry PDCCH candidates with the different CCE ALs.

According to another embodiment in conjunction with the third aspect of the present disclosure, the method further includes determining start positions of the at least one search space block and determining locations of the PDCCH candidates of the different CCE ALs within the at least one search space block.

According to another embodiment in conjunction with the third aspect of the present disclosure, the method further includes determining start positions of the PDCCH candidates within the at least one search space block based on at least one of an output of the a first hashing function, a first offset, and a bit-map.

According to another embodiment in conjunction with the third aspect of the present disclosure, the inputs of the first hashing function include at least one of the identity of the user device and a slot/symbol index.

According to another embodiment in conjunction with the third aspect of the present disclosure, the first hashing function is used in conjunction with a second offset.

According to another embodiment in conjunction with the third aspect of the present disclosure, the method further includes determining the start positions of the at least one search space block using at least one of an output of a second hashing function, a third offset, and a bit-map configuration to the user device.

According to another embodiment in conjunction with the third aspect of the present disclosure, the method further includes shifting the start positions of the at least one search space block by an offset.

According to another embodiment in conjunction with the third aspect of the present disclosure, the search space blocks are located contiguously over time of a control region.

According to another embodiment in conjunction with the third aspect of the present disclosure, the search space blocks are located contiguously over frequency of a control region.

According to another embodiment in conjunction with the third aspect of the present disclosure, the search space blocks are distributed over time of a control region.

According to another embodiment in conjunction with the third aspect of the present disclosure, the search space blocks are distributed over frequency of a control region.

According to another embodiment in conjunction with the third aspect of the present disclosure, the search space blocks have different sizes.

According to another embodiment in conjunction with the third aspect of the present disclosure, a number of PDCCH candidates of each CCE AL in a search space blocks are configured.

According to another embodiment in conjunction with the third aspect of the present disclosure, the method further includes mapping the CCEs of the PDCCH candidates onto frequency in a distributed manner.

According to another embodiment in conjunction with the third aspect of the present disclosure, the method further includes mapping the CCEs of the PDCCH candidates onto time in a contiguous manner.

According to another embodiment in conjunction with the third aspect of the present disclosure, the CCEs include a plurality of resource element groups (REGs), the CCE is a mapping unit of the PDCCH candidates, and wherein the method further includes mapping the REGs on contiguous resources.

In the embodiment of the present disclosure, the processor is configured to group the CCEs in a search space into at least one search space block based on the different CCE ALs. The at least one search space block is in a nested structure to carry PDCCH candidates with the different CCE ALs. The processor is configured to determine start positions of the at least one search space block to balance between channel estimation performance.

BRIEF DESCRIPTION OF THE DRAWINGS

In order to more clearly illustrate the embodiments of the present disclosure or related art, the following figures will be described in the embodiments are briefly introduced. It is obvious that the drawings are merely some embodiments of the present disclosure, a person having ordinary skill in this field can obtain other figures according to these figures without paying the premise.

FIG. 1 is a block diagram of a network node for a wireless communication system according to an embodiment of the present disclosure.
FIG. 2 is a flowchart illustrating a method for a wireless communication system according to an embodiment of the present disclosure.
FIG. 3 is a block diagram of a user device for a wireless communication system according to an embodiment of the present disclosure.
FIG. 4 is a diagram of mapping of control channel elements (CCEs) in a distributed manner on the same orthogonal frequency-division multiplexing (OFDM) symbol according to an embodiment of the present disclosure.

FIG. 5 is a diagram of mapping of CCEs in a distributed manner on different OFDM symbols according to an embodiment of the present disclosure.

FIG. 6 is a diagram of physical downlink control channel (PDCCH) candidates according to an embodiment of the present disclosure.

FIG. 7 is a diagram of search space blocks according to an embodiment of the present disclosure.

FIG. 8 is a diagram of a search space according to an embodiment of the present disclosure.

FIG. 9 is a diagram of a search space according to an embodiment of the present disclosure.

FIG. 10 is a diagram of a search space according to an embodiment of the present disclosure.

FIG. 11 is a diagram of a search space according to an embodiment of the present disclosure.

FIG. 12 is a diagram of a search space according to an embodiment of the present disclosure.

FIG. 13 is a diagram of a search space according to an embodiment of the present disclosure.

FIG. 14 is a diagram of a search space according to an embodiment of the present disclosure.

FIG. 15 is a diagram of a search space according to an embodiment of the present disclosure.

FIG. 16 is a diagram of a search space according to an embodiment of the present disclosure.


DETAILED DESCRIPTION OF THE EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the invention.

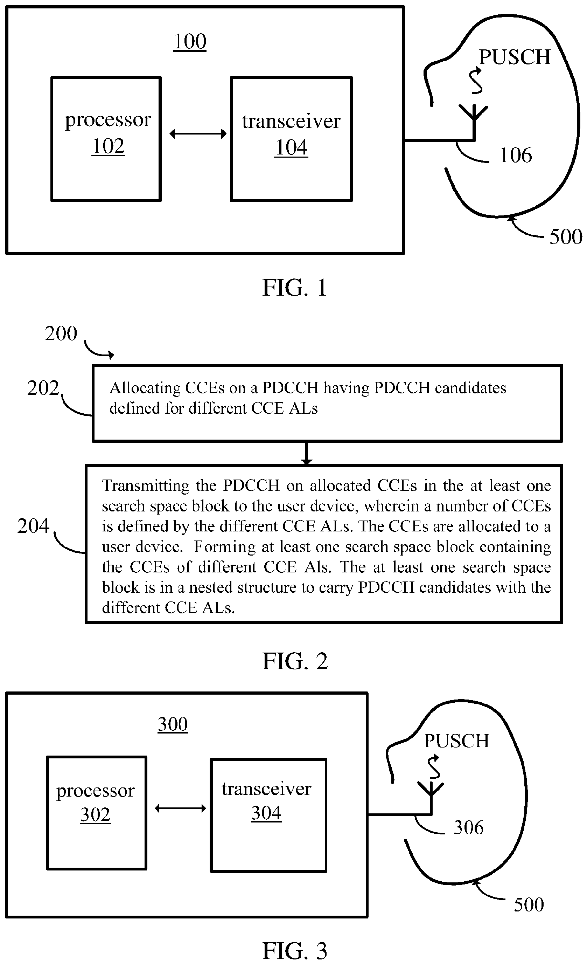

Referring to FIG. 1, a network node 100 is in communication with a wireless communication system 500. The network node 100 includes a processor 102 and a transceiver 104. The processor 102 is in communication with the transceiver 104. The network node 100 may include one or more optional antennas 106 coupled to the transceiver 104. The processor 102 is configured to allocate a plurality of control channel elements (CCEs) for a physical downlink control channel (PDCCH) having PDCCH candidates defined for a plurality of different CCE aggregation levels (ALs). A number of CCEs is defined by the different CCE ALs. The CCEs are allocated to a user device 300. The processor 102 is configured to form at least one search space block containing the CCEs of different CCE ALs, the at least one search space block is in a nested structure to carry PDCCH candidates with the different CCE ALs, and the processor 102 is configured to determine start positions of the at least one search space block, and the processor 102 is configured to determine locations of the PDCCH candidates of the different CCE ALs within the at least one search space block. The transceiver 104 is configured to transmit the PDCCH on allocated CCEs in the at least one search space block to the user device.

The network node 100 or base station, e.g. a radio base station (RBS), which in some networks may be referred to as transmitter such as eNB, eNodeB, NodeB, or B node, depending on the communication technology and terminology used. The radio network nodes may be of different classes such as e.g. macro eNodeB, home eNodeB or pico base station, based on transmission power and thereby also cell size. The radio network node can be a station (STA), which is any device that contains an IEEE 802.1 1 -conformant media access control (MAC) and physical layer (PHY) interface to the wireless medium (WM).

Referring to FIG. 1 and FIG. 2, a method 200 may be executed in the network node 100. The method 200 includes a block 202 of allocating a plurality of control channel elements (CCEs) on a physical downlink control channel (PDCCH) having PDCCH candidates defined for a plurality of different CCE aggregation levels (ALs) and a block 204 of signaling allocation information to the user device 300. A number of CCEs is defined by the different CCE ALs. The CCEs are associated with a user device 300. The processor 102 is configured to group the CCEs in a search space into at least one search space block based on the different CCE ALs. The at least one search space block is in a nested structure to carry PDCCH candidates with the different CCE ALs, and the processor 102 is configured to determine start positions of the at least one search space block. The allocation information includes a frequency location and a number of the different CCE ALs.

The method further includes determining the start positions of the at least one search space block based on an output of a first hashing function using an identity of the user device 300. The method further includes shifting the start positions of the at least one search space block by an offset.

Referring to FIG. 3, the user device 300 includes a processor 302 and a transceiver 304. The processor 302 is in communication with the transceiver 304. In the embodiment, the user device 300 may further includes one or more optional antennas 306 coupled to the transceiver 304. The processor 302 of the user device 300 is configured to determine CCEs for at least one network nodes 100.

The transceiver is configured to transmit the CCEs for a physical downlink control channel (PDCCH) to the at least one network node 100. The CCEs are allocated for the PDCCH having PDCCH candidates defined for a plurality of different CCE aggregation levels (ALs). A number of CCEs is defined by the different CCE ALs. The CCEs are allocated to a user device 300. The processor 302 is configured to form at least one search space block containing the CCEs of different CCE ALs, the at least one search space block is in a nested structure to carry PDCCH candidates with the different CCE ALs, and the processor 302 is configured to determine start positions of the at least one search space block, and the processor 302 is configured to determine locations of the PDCCH candidates of the different CCE ALs within the at least one search space block.

The transceiver 304 is configured to transmit the PDCCH on allocated CCEs in the at least one search space block to the user device 300.

The user device 300 such as user equipment (UE), mobile station, wireless terminal and/or mobile terminal is in communication with the wireless communication system 500, sometimes also referred to as a cellular radio system. The user device 300 may further be referred to as mobile telephones, cellular telephones, computer tablets or laptops with wireless capability. The user device 300 may be, for example, portable, pocket-storable, hand-held, computer-comprised, or vehicle-mounted mobile devices, enabled to communicate voice and/or data, via the radio access network, with another entity, such as another receiver or a server. The user device 300 can be a STA, which is any device that contains an IEEE 802.1 1 -conformant MAC and PHY interface to the WM.

In fourth generation of mobile phone mobile communication technology standards (4G) long term evolution (LTE) system, control region spans the whole system bandwidth and occupies first several orthogonal frequency-division multiplexing (OFDM) symbols in a subframe. Common reference signal (CRS) are used for demodulation of PDCCH. As CRS are shared by all the UE and locations of CRS are fixed in time-frequency domain, channel estimation can be accomplished once for all the PDCCH candidates by each UE when decoding its PDCCH in the control region.

In 5G new radio (NR) system, as demodulation reference signals (DMRS) is used for PDCCH demodulation and DMRS are transmitted along with target PDCCH for a particular UE (or a group of UEs), the UE could accomplish the channel estimation for decoding each PDCCH candidates. As the UE may have a number of PDCCH candidates with different control channel element (CCE) aggregation level (AL), and such candidates could be spread across the time-frequency resources in a control resource set (the time-frequency region that carry the control channel), the amount of channel estimation performance could be large if such performance could not be shared or reused among decoding different PDCCH candidates. To ease the issue, a nested structure could be utilized, where PDCCH candidates with different CCE AL could be aligned or confined in the same sets of resources.

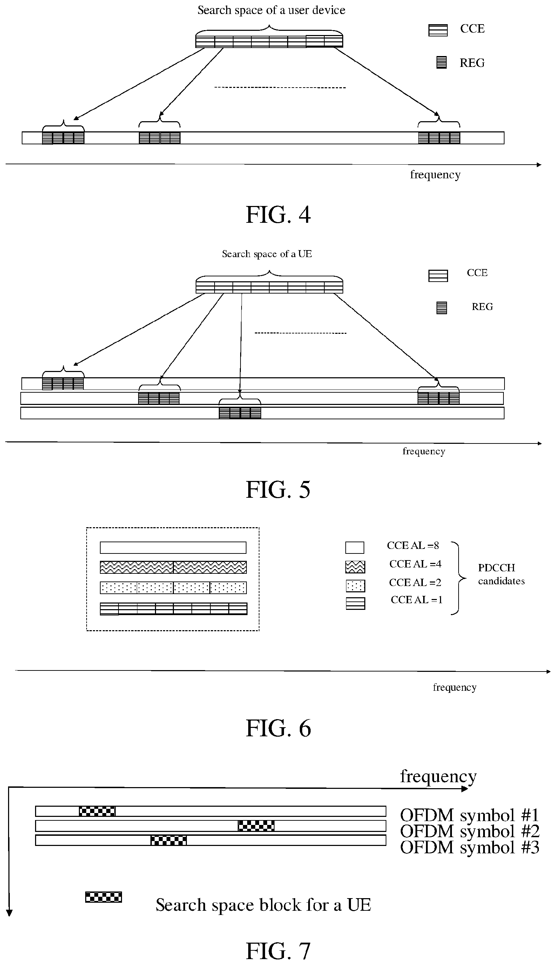

Referring to FIG. 4, an example where each CCE is mapped in a distributed manner to different frequency locations on the same OFDM symbol while the REGs in a CCE are mapped together. Such mapping has benefits, CCE is used as the smallest mapping unit, and therefore the REGs in a CCE (e.g., a CCE may contain 4 REGs as shown in the example) are allocated on contiguous resources, this could help with the channel estimation as more DMRS could be used. The distributed CCEs may benefits from frequency diversity gain.

The search space block could be a physical block, or the search space block could be a logical block. If the search space block is considered as logical block, components of the search space block could be further mapped to the physical resources in the control region. For example, the CCE or REG (a CCE further consists of multiple resource element group REG) in a search space block could be further mapped to different physical resource. FIG. 4 show an example where each CCE in a search space block are mapped in a distributed manner to different frequency locations on the same OFDM symbol while the REGs in a CCE are mapped together (namely they are mapped contiguously on frequency). Such mapping has benefits, a CCE is used as the smallest mapping unit, and therefore the REGs in a CCE (In the example shown a CCE is assumed to contain 4 REGs) are allocated on contiguous resources, this could help with the channel estimation as more DMRS could be used. The distributed CCEs may benefit from frequency diversity gain.

Referring to FIG. 5, to further exploit diversity gain in both time/frequency and allow power boosting, each CCE could be mapped to different OFDM symbols as an example. It should be mentioned that as examples, CCE AL = 1, 2, 4, and 8 are used here. The proposal could be applied to other CCE AL as well.

Referring to FIG. 6, in an embodiment, PDCCH candidates with different AL (e.g., 1,2,4, and 8) all share (or partially shared) the same sets of resources. Benefits of such structure are that the channel estimation done on this set of resources could be reused by decoding all PDCCH candidates with different AL and thus save the overall channel estimation performance. Such structure also simplifies the search space definition of PDCCH. The search space is the combination of all PDCCH candidates that a UE may need to search for PDCCH. In LTE, the search space for PDCCH is defined on per CCE AL, namely, for each CCE AL, a separate search space is specified. In order to search for all its PDCCH candidates, the UE may need to search through all the search spaces for AL numbers 1, 2, 4, and 8 (that is AL = 1, 2, 4, 8) and more. If nested structure is defined as mentioned here. The search space may not need to be specified based on CCE AL, but rather on a search space block level. For example, the PDCCH candidates with different CCE AL as shown in FIG. 6 could be specified as one search space block. UE could be configured with one or multiple search space blocks, each of search space blocks contains a combination of PDCCH candidates of different CCE AL. Such search space blocks could be distributed/ contiguous on frequency/time and/or portions of the search space blocks could be distributed/contiguous on time/frequency through mapping of CCE-to-REG mapping. As the overall time-frequency control region is shared by all the UEs, and search space could have overlapping in time/frequency.

FIG. 7 is an example where a couple of search space blocks in a UE search space would be allocated on different OFDM symbols. This could allow the PDCCH candidates transmitted on different symbols. For example, if beamforming (BF) technique is used, and different OFDM symbol is associated with different analog beams, the transmission of PDCCH candidates on different OFDM symbols would allow them to be transmitted using different beams. This could be useful if one beam link pair (BLP, pair of gNB transmit and UE receive beams) fails as the gNB could use another beam to transmit PDCCH. It would also allow joint transmission of PDCCH on multiple beams, thus to improve the receiving quality of PDCCH especially for UEs in overlapping coverage of two transmit beams.

The nested structure has benefits as mentioned above, it may have an issue though. As the overall time-frequency control region is shared by all the UEs, and search space could have overlapping in time/frequency.

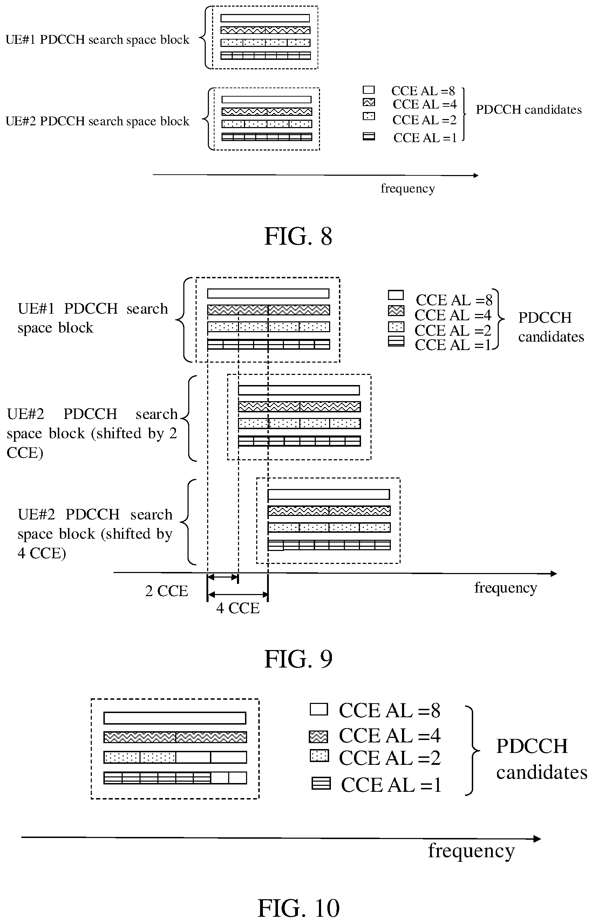

Referring to FIG. 8, if two UE's search spaces both have nested structure and search space blocks of the two UE's search spaces are completely overlapped, it may cause more blocking among the PDCCH candidates of the UEs. To solve this issue, a simply method is to add some offset among the starting CCE of the search space block.

Referring to FIG. 9, starting CCE index of nested search space block of a UE could be shifted by an offset of one or multiple CCE lengths, thus reduce the block issue but still maintain the nested structure of search space for each UE. The offset could be in the order of CCE(s). Such offset could be determined implicitly by some UE parameters such as UE RNTI, namely, it is a function of some UE identity such as RNTI, or it could be explicitly signaled by gNB, or it could be a combination of both.

In general, the overall resources that are available for a UE to search for its PDCCH could be grouped into a number of blocks, each contains the number of CCEs in largest CCE AL that is supported, say 8 or 16 CCEs. A Hashing function could be used in conjunction with maybe an offset (in the order of CCEs), to determine the start of a search space block for a UE. Here, a search space block of a UE is a set of CCEs that contain nested structure with PDCCH candidates of different CCE AL. As can be observed in FIG. 9, even though using an offset to shift the starting CCE position of search space blocks of different UE could reduce the blocking issue. It may not completely solve the issue as PDCCH candidates in lower CCE AL could still collide with each other. An alternative solution could be to select certain sets of resources in a search space block to transmit PDCCH candidates with lower CCE AL, and randomize such selections (CCE locations that are used to carry PDCCH candidates), thus lead less collisions among PDCCH candidates of different UEs.

As shown in FIG. 9 for an example, the starting CCE index of nested search space block of a UE could be shifted by an offset of one or multiple CCE lengths, thus reduce the block issue but still maintain the nested structure of search space for each UE. The offset could be in the order of CCE(s). Such offset could be determined implicitly by some UE parameters such as UE RNTI, namely, it is a function of some UE identity such as RNTI, or it could be explicitly signaled by gNB, or it could be a combination of both.

For example, it could be configured semi-statically using higher layer signaling such as RRC, it could also be transmitted in a group common control signal to a group UEs, alternatively, it could be signaled dynamically by physical layer signaling such as downlink control information (DCI). For example, if UE receives such an offset indication in a DCI, it may assume that its PDCCH search space needs to be shifted by such an offset from the next slot.

The offset values could be small or large, for example, the offset could be 1 CCE length, alternatively, it could be 4 CCEs length. There are pros and cons for small and large offsets. In general, the smaller the offset is, the higher blocking probability it could incur, and leads to less overall resource usage, while the larger the offset is, the less blocking probability it may incur, and may lead to more overall resource usage. The gNB could configure/signal different offsets for different scenarios. For example. If there are more UEs at cell center, which may more likely use 1 to 2 CCE ALs for PDCCH, it could configure small offsets and thus allow more search space overlapping but less overall resource usage (or with same amount of resources to support more UE). On the other hand, if there are more UEs at the cell edge, the gNB could configure larger offset which lead to less blocking issue especially for larger CCE AL. Such offset configuration could be cell specific or UE specific. In another embodiment, there are few UEs but all require higher CCE AL for its PDCCH, gNB could configure offsets such that all the search space block for each UE do not overlap with each other and therefore completely avoid the blocking issue.

Referring to FIG. 10 for an example, the PDCCH candidates for CCE AL = 1 (that is a number of CCE AL is equal to 1) is configured to be 6 (instead of 8) and PDCCH candidates for CCE AL = 1 is configured to be 2, thus maybe keep the total BD under a limit. The number of PDCCH candidates could be configured separately or together for each search space block assigned for a UE and signaled to the UE. A search space block (nested structure) could contain a full set of PDCCH candidates with different CCE AL as shown in FIG. 6, where the PDCCH candidates of each CCE AL is listed in Table 1. To control the total blind decoding (BD), the combination of PDCCH candidates could be adjusted and configured for each search space block by the gNB.

Table 1 Full set of PDCCH candidates in a nested search space block

|  | CCE AL = 1 | CCE AL = 2 | CCE AL = 4 | CCE AL = 8 |
|---|---|---|---|---|
| PDCCH candidates | 8 | 4 | 2 | 1 |

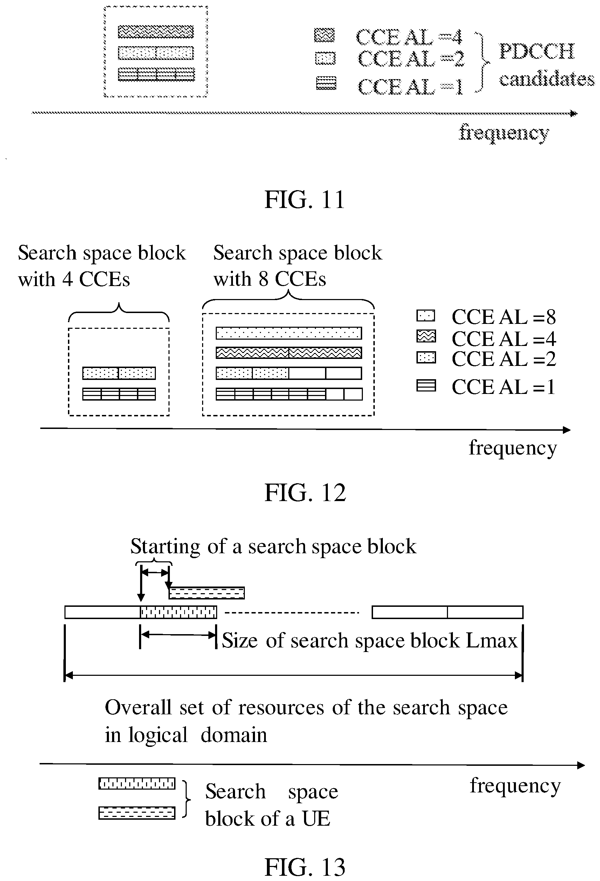

Referring to FIG. 11, an example of a search space lock with 8 CCEs is provided. In general, a search space block could be configured and signaled to the UE with different CCE length. The configuration could contain number of CCEs, the PDCCH candidates for each CCE AL etc. As shown in FIG. 11 as an example, a search space block has 4 CCEs and only support PDCCH candidates for CCE AL = 1, 2 and 4. Such flexibility in search space block configuration will make the overall resource utilization more efficient, and yet maintain blocking probability in the control. For example, for the UE that is at cell center, the UE could be configured with search space blocks with less number of CCEs, while for UE at cell edge, search space blocks with larger number of CCEs could be configured.

Referring to FIG. 12, the configuration of search space block could be on per UE basis and even on per search space block basis, namely, each UE could be configured with different search space blocks with the same or different CCE numbers. For example, as shown in FIG. 12 as an example, for a particular UE in cell center, it could be configured with a couple of search space blocks, most of them with fewer number of CCEs (e.g., 4 or less). However, to maintain fall back mechanism, a search space block of 8 CCE could be configured. In the situation that channel is weak and unpredictable, the gNB could transmit PDCCH using 8 CCEs to maintain the robustness of the control link.

Referring to FIG. 13, in general, the overall resources that are available for a UE to search for PDCCH could be grouped into a number of blocks, each contains the number of CCEs in largest CCE AL that is supported, say 8 or 16 CCEs. A hashing function could be used in conjunction with maybe an offset (in the order of CCEs), to determine the start of a search space block for a UE. Here, a search space block of a UE is a set of CCEs that contain nested structure with PDCCH candidates of different CCE AL. FIG. 13 shows an example, in which an overall PDCCH search space could be divided into a number of search space block and each search space block contains Lmax CCEs where Lmax is the largest CCE AL that could be supported, for example Lmax = 8 or 16. The starting CCE of a search space block for a UE could be determined by a hashing function based on UE identity(ID), slot number, and maybe plus an offset.

As can be observed in FIG. 9, even though using an offset to shift the starting CCE position of search space blocks of different UE could reduce the blocking issue. It may not completely solve the issue as PDCCH candidates in lower CCE AL could still collide with each other. An alternative solution could be to select certain sets of resources in a search space block to transmit PDCCH candidates with lower CCE AL, and randomize such selections (CCE locations that are used to carry PDCCH candidates), thus lead less collisions among PDCCH candidates of different UEs.

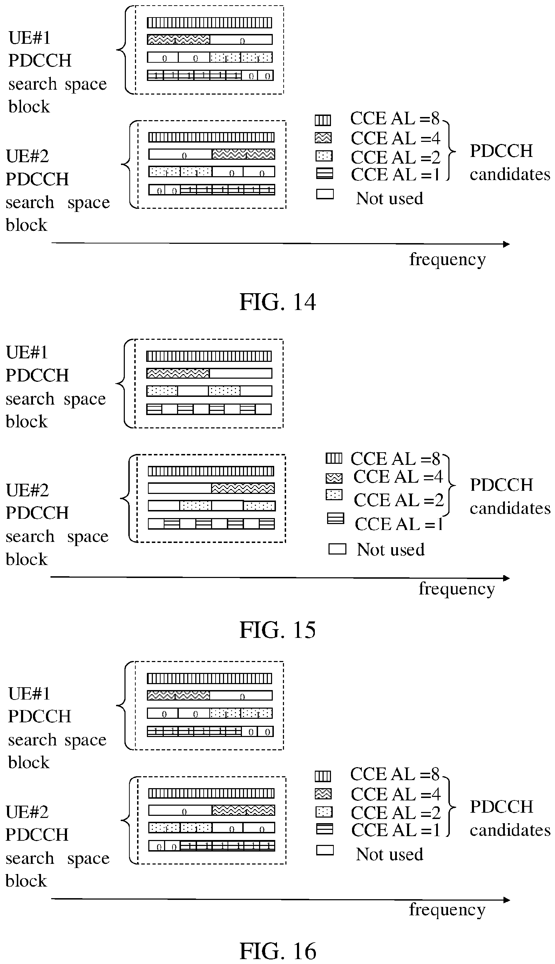

Referring to FIG. 14, an example, where only certain sets of resources in a search space block are used to transmit PDCCH candidates is provided. Such selection could be randomized between different UEs so that the collision opportunities of PDCCH respective candidates could be reduced.

Referring to FIG. 14, to randomize the selections, some alternative ways could be used. For example, different hashing functions bound by the search space block with a size of largest CCE AL supported could be used based on UE ID, slot/symbol index to determine locations of PDCCH candidates for each CCE AL within the search space block. To further reduce the chance of collisions, offsets could also be used to shift the PDCCH candidates. The following is an exemplary formula to indicate the start CCE of a PDCCH candidate with CCE AL = L.

$$ L\left\{ (Y_k + m)\,mod\,\left\lfloor \frac{N_{CCE,L_{max}}}{L} \right\rfloor \right\} + I_{offset} $$

Where $Y_k$ is a variable that is based on UE ID and maybe some other parameters such as slot/symbol index. $N_{(CCE,\,L_{max})}$ is the largest CCE AL that could be supported, e.g., 8 or 16. m is the PDCCH candidate index at CCE AL = L. $I_{offset}$ is an offset which could be CCE AL dependent.

The resources (CCEs) selected to carry PDCCH candidates could be distributed in the search space block and thus reduce the chance of collisions. FIG. 15 shows such an example in which the CCEs that are allocated to carry PDCCH candidates are distributed in the search space block. The following exemplary formula could be used to calculate the start CCE of each PDCCH candidate at CCE AL = L. It shall be mentioned that the selection mentioned above are based on some implicit information such as UE ID, slot/symbol index, therefore, it may not need to be conveyed to the UE.

$$ L\left\{ (Y_k + 2*m)\,mod\,\left\lfloor \frac{N_{CCE,L_{max}}}{L} \right\rfloor \right\} + I_{offset} $$

Referring to FIG. 16, alternatively, an explicit bit-maps could be used to indicate the PDCCH candidates within a search space block. As shown in FIG. 16, for each sets of resources that could be used for a . PDCCH candidate of a CCE AL, a bit could be used to indicate whether it is used to transmit a PDCCH candidate or not. Value "1" indicates a PDCCH candidate could be transmitted while value "0" indicates it is not used to transmit a PDCCH candidate. As such selection could be based on some explicitly indications such as using of bit-maps, it could be configured for the UE by higher layer signaling in a semi-static manner.

The explicit indications such as bit-map method could also be used to configure/indicate the number of PDCCH candidates for each CCE AL within a search space block as well as corresponding locations because the number of values "1" in bit-map corresponding to a CCE AL as described earlier indicates the number of PDCCH candidates for that CCE AL. Such configuration/indications could be the same for all search space blocks that are configured for the UE, or it could be search space block dependent, namely, for different search space blocks allocated for the UE, the configurations of PDCCH candidates within that search space block could be different. This could give gNB full flexibility in scheduling PDCCH transmission with necessary CCE AL, multiplexing different PDCCHs together and reducing the collisions.

The bit-map could also be used to indicate the search space blocks that are allocated to a UE as shown in FIG. 13 At the beginning, the UE can use Hashing function based on UE ID etc. to determine its search space blocks and upon receiving high layer signaling with a bit-map assignment, it could use that indication to determine its search space blocks.

The implicit and explicit ways of indicating PDCCH candidates could be used together. For example, start CCE of first PDCCH candidate of each CCE AL could be implicitly determined by UE ID, while explicit bit-map could be used to indicate following PDCCH candidates of the same CCE AL.

In the embodiment of the present disclosure, the processor is configured to group the CCEs in a search space into at least one search space block based on the different CCE ALs. The at least one search space block is in a nested structure to carry PDCCH candidates with the different CCE ALs. The processor is configured to determine start positions of the at least one search space block to balance between channel estimation performance.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure.

It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments.

Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

While the present disclosure has been described in connection with what is considered the most practical and preferred embodiments, it is understood that the present disclosure is not limited to the disclosed embodiments. The invention is solely defined by the appended claims.

**Claims**

1. A network node for a wireless communication system, comprising:

a processor (102) configured to allocate a plurality of control channel elements, CCEs, for a physical downlink control channel, PDCCH, having PDCCH candidates defined for a plurality of different CCE aggregation levels, ALs, a number of CCEs being defined by the different CCE ALs, the CCEs being allocated to a user device, wherein the processor (102) is configured to form at least two search space blocks, each of the at least two search space blocks containing the CCEs of different CCE ALs, being allocated to different user devices and being in a nested structure to carry PDCCH candidates with the different CCE ALs; and
a transceiver (104) configured to transmit the PDCCH on allocated CCEs in each of the at least two search space blocks to the different user devices, respectively;
the processor (102) is further configured to shift, by an offset of one or more CCE lengths, start positions of CCE index of one of the at least two search space blocks of one of the different user devices with respect to start positions of CCE index of another one of the at least two search space blocks of another one of the different user devices;
wherein the processor (102) is configured to determine start positions of the PDCCH candidates within the at least two search space blocks based on an output of a first hashing function, a first offset, and a bit-map; and the first offset refers to an offset of one or more CCE lengths,
wherein inputs of the first hashing function include at least one of the identity of the user device and a slot or symbol index.

2. A user device for a wireless communication system, comprising:

a processor (302) configured to determine a plurality of control channel elements, CCEs, for at least one network node; and
a transceiver (304) configured to receive the CCEs for a physical downlink control channel, PDCCH, from the at least one network node, wherein the CCEs is allocated for the PDCCH having PDCCH candidates defined for a plurality of different CCE aggregation levels, ALs, a number of CCEs being defined by the different CCE ALs, the CCEs being allocated to a user device, wherein the processor (302) is configured to form at least one search space block containing the CCEs of different CCE ALs, the at least one search space block is in a nested structure to carry PDCCH candidates with the different CCE ALs;
the processor (302) is further configured to shift, by an offset of one or more CCE lengths, start positions of CCE index of the at least one search space block of the user device with respect to start positions of CCE index of at least one search space block of another user device,
wherein the processor (302) is configured to determine start positions of the PDCCH candidates within the at least one search space block of the user device based on an output of a first hashing function, a first offset, and a bit-map; and the first offset refers to an offset of one or more CCE lengths,
wherein inputs of the first hashing function include at least one of the identity of the user device and a slot or symbol index.

3. The user device of claim 2, wherein the processor (302) is configured to determine start positions of the at least one search space block, and the processor (302) is configured to determine locations of the PDCCH candidates of the different CCE ALs within the at least one search space block.

4. The user device of claim 2, wherein the first hashing function is used in conjunction with a second offset.

5. The user device of claim 2, wherein the processor (302) is configured to determine the start positions of the at least one search space block using at least one of an output of a second hashing function, a third offset, and a bit-map configuration to the user device.

6. The user device of claim 2, wherein the search space blocks are located contiguously over time of a control region.

7. The user device of claim 2, wherein the search space blocks are located contiguously over frequency of a control region, and/or the search space blocks are distributed over time of a control region.

8. The user device of claim 2, wherein the search space blocks are distributed over frequency of a control region, and/or the search space blocks have different sizes.

9. The user device of claim 2, wherein a number of PDCCH candidates of each CCE AL in a search space blocks are configured.

10. The user device of claim 2, wherein the processor (302) is configured to map the CCEs of the PDCCH candidates onto frequency in a distributed manner.

11. The user device of claim 2, wherein the processor (302) is configured to map the CCEs of the PDCCH candidates onto time in a contiguous manner.

12. The user device of claim 2, wherein the CCEs comprise a plurality of resource element groups, REGs, wherein the CCE is a mapping unit of the PDCCH candidates, and the processor (302) is configured to map the REGs on contiguous resources.

**Patentansprüche**

1. Netzwerkknoten für ein Drahtloskommunikationssystem, Folgendes umfassend:

einen Prozessor (102), der dazu ausgelegt ist, eine Vielzahl von Steuerkanalelementen, CCEs, für einen physikalischen Downlink-Steuerkanal, PDCCH, zuzuweisen, wobei PDCCH-Kandidaten für eine Vielzahl von verschiedenen CCE-Aggregationsstufen, ALs, definiert sind, wobei eine Anzahl von CCEs durch die verschiedenen CCE-ALs definiert ist, wobei die CCEs einem Benutzergerät zugewiesen werden,
wobei der Prozessor (102) dazu ausgelegt ist, mindestens zwei Suchraumblöcke zu bilden, wobei jeder der mindestens zwei Suchraumblöcke die CCEs verschiedener CCE ALs enthält, die verschiedenen Benutzergeräten zugewiesen sind und sich in einer verschachtelten Struktur befinden, um PDCCH-Kandidaten mit den verschiedenen CCE ALs zu tragen; und
einen Transceiver (104), der dazu ausgelegt ist, den PDCCH auf zugewiesenen CCEs in jedem der mindestens zwei Suchraumblöcke jeweils an die verschiedenen Benutzergeräte zu übertragen;
der Prozessor (102) ferner dazu ausgelegt ist, Startpositionen von CCE-Index eines der mindestens zwei Suchraumblöcke eines der verschiedenen Benutzergeräte in Bezug auf Startpositionen von CCE-Index eines anderen der mindestens zwei Suchraumblöcke eines anderen der verschiedenen Benutzergeräte um einen Versatz von einer oder mehreren CCE-Längen zu verschieben;
wobei der Prozessor (102) dazu ausgelegt ist, Startpositionen der PDCCH-Kandidaten innerhalb der mindestens zwei Suchraumblöcke basierend auf einer Ausgabe einer ersten Hashing-Funktion, einem ersten Offset und einer Bit-Map zu bestimmen; und der erste Offset sich auf einen Offset von einer oder mehreren CCE-Längen bezieht,
wobei die Eingaben der ersten Hashing-Funktion mindestens eines von der Identität des Benutzergeräts und einen Schlitz- oder Symbolindex enthalten.

2. Benutzergerät für ein Drahtloskommunikationssystem, Folgendes umfassend:

einen Prozessor (302), der dazu ausgelegt ist, eine Vielzahl von Steuerkanalelementen, CCEs, für mindestens einen Netzwerkknoten zu bestimmen; und
einen Transceiver (304), der dazu ausgelegt ist, die CCEs für einen physikalischen Downlink-Steuerkanal, PDCCH, von dem mindestens einen Netzwerkknoten zu empfangen, wobei die CCEs für den PDCCH mit PDCCH-Kandidaten zugewiesen werden, die für eine Vielzahl von verschiedenen CCE-Aggregationsstufen, ALs, definiert sind, wobei eine Anzahl von CCEs durch die verschiedenen CCE-ALs definiert ist, wobei die CCEs einem Benutzergerät zugewiesen werden, wobei der Prozessor (302) dazu ausgelegt ist, mindestens einen Suchraumblock zu bilden, der die CCEs verschiedener CCE ALs enthält, wobei der mindestens eine Suchraumblock in einer verschachtelten Struktur ist, um PDCCH-Kandidaten mit den verschiedenen CCE ALs zu tragen;
der Prozessor (302) ferner dazu ausgelegt ist, Startpositionen des CCE-Index des mindestens einen Suchraumblocks des Benutzergerätes in Bezug auf Startpositionen des CCE-Index des mindestens einen Suchraumblocks eines anderen Benutzergerätes um einen Versatz von einer oder mehreren CCE-Längen zu verschieben,
wobei der Prozessor (302) dazu ausgelegt ist, Startpositionen der PDCCH-Kandidaten innerhalb des mindestens einen Suchraumblocks des Benutzergerätes basierend auf einer Ausgabe einer ersten Hashing-Funktion, einem ersten Offset und einer Bit-Map zu bestimmen; und der erste Offset sich auf einen Offset von einer oder mehreren CCE-Längen bezieht,
wobei die Eingaben der ersten Hashing-Funktion mindestens eines von der Identität des Benutzergeräts und einen Schlitz- oder Symbolindex enthalten.

3. Benutzergerät nach Anspruch 2,
wobei der Prozessor (302) dazu ausgelegt ist, Startpositionen des mindestens einen Suchraumblocks zu bestimmen, und der Prozessor (302) dazu ausgelegt ist, Positionen der PDCCH-Kandidaten der verschiedenen CCE ALs innerhalb des mindestens einen Suchraumblocks zu bestimmen.

4. Benutzergerät nach Anspruch 2,
wobei die erste Hashing-Funktion in Verbindung mit einem zweiten Offset verwendet wird.

5. Benutzergerät nach Anspruch 2,
wobei der Prozessor (302) dazu ausgelegt ist, die Startpositionen des mindestens einen Suchraumblocks unter Verwendung mindestens einer Ausgabe einer zweiten Hashing-Funktion, eines dritten Offsets und einer Bit-Map-Konfiguration an das Benutzergerät zu bestimmen.

6. Benutzergerät nach Anspruch 2,
wobei die Suchraumblöcke über die Zeit zusammenhängend in einer Steuerregion liegen.

7. Benutzergerät nach Anspruch 2,
wobei die Suchraumblöcke zusammenhängend über die Frequenz einer Steuerregion angeordnet sind, und/oder die Suchraumblöcke über die Zeit einer Steuerregion verteilt sind.

8. Benutzergerät nach Anspruch 2,
wobei die Suchraumblöcke über die Frequenz einer Steuerregion verteilt sind, und/oder die Suchraumblöcke unterschiedliche Größen haben.

9. Benutzergerät nach Anspruch 2,
wobei eine Anzahl von PDCCH-Kandidaten jeder CCE AL in Suchraumblöcken konfiguriert wird.

10. Benutzergerät nach Anspruch 2,
wobei der Prozessor (302) dazu ausgelegt ist, die CCEs der PDCCH-Kandidaten auf eine verteilte Weise auf die Frequenz abzubilden.

11. Benutzergerät nach Anspruch 2,
wobei der Prozessor (302) dazu ausgelegt ist, die CCEs der PDCCH-Kandidaten auf eine zusammenhängende Weise auf die Zeit abzubilden.

12. Benutzergerät nach Anspruch 2,
wobei die CCEs eine Vielzahl von Ressourcenelementgruppen, REGs, umfassen,
wobei das CCE eine Abbildungseinheit der PDCCH-Kandidaten ist, und der Prozessor (302) dazu ausgelegt ist, die REGs auf zusammenhängende Ressourcen abzubilden.

**Revendications**

1. Nœud de réseau pour un système de communication sans fil, comprenant :

un processeur (102) configuré pour attribuer une pluralité d'éléments de canal de commande, CCE, à un canal physique de commande de liaison descendante, PDCCH, ayant des candidats PDCCH définis pour une pluralité de différents niveaux d'agrégation, AL, de CCE, un nombre de CCE étant défini par les différents AL de CCE, les CCE étant attribués à un dispositif d'utilisateur, dans lequel le processeur (102) est configuré pour former au moins deux blocs d'espace de recherche, chacun des au moins deux blocs d'espace de recherche contenant les CCE de différents AL de CCE, étant attribué à différents dispositifs d'utilisateur et étant en structure imbriquée pour transporter les candidats PDCCH avec les différents AL de CCE ; et
un émetteur-récepteur (104) configuré pour transmettre le PDCCH sur des CCE attribués dans chacun des au moins deux blocs d'espace de recherche aux différents dispositifs d'utilisateur, respectivement ;

le processeur (102) est en outre configuré pour décaler, d'un décalage d'une ou plusieurs longueurs de CCE, des positions de départ de l'indice de CCE de l'un des au moins deux blocs d'espace de recherche de l'un des différents dispositifs d'utilisateur par rapport aux positions de départ de l'indice de CCE d'un autre des au moins deux blocs d'espace de recherche d'un autre des différents dispositifs d'utilisateur ;

dans lequel le processeur (102) est configuré pour déterminer des positions de départ des candidats PDCCH à l'intérieur des au moins deux blocs d'espace de recherche sur la base d'une sortie d'une première fonction de hachage, d'un premier décalage, et d'une table de bits ; et le premier décalage se réfère à un décalage d'une ou plusieurs longueurs de CCE,

dans lequel des entrées de la première fonction de hachage incluent au moins l'un de l'identité du dispositif d'utilisateur et d'un indice de créneau ou de symbole.

2. Dispositif d'utilisateur pour un système de communication sans fil, comprenant:

un processeur (302) configuré pour déterminer une pluralité d'éléments de canal de commande, CCE, pour au moins un nœud de réseau ; et

un émetteur-récepteur (304), configuré pour recevoir les CCE pour un canal physique de commande de liaison descendante, PDCCH, depuis l'au moins un nœud de réseau, dans lequel les CCE sont attribués au PDCCH ayant des candidats PDCCH définis pour une pluralité de différents niveaux d'agrégation, AL, de CCE, un nombre de CCE étant défini par les différents AL de CCE, les CCE étant attribués à un dispositif d'utilisateur, dans lequel le processeur (302) est configuré pour former au moins un bloc d'espace de recherche contenant les CCE des différents AL de CCE, l'au moins un bloc d'espace de recherche est en structure imbriquée pour transporter les candidats PDCCH avec les différents AL de CCE ;

le processeur (302) est en outre configuré pour décaler, par un décalage d'une ou plusieurs longueurs de CCE, des positions de départ d'un indice de CCE de l'au moins un bloc d'espace de recherche du dispositif d'utilisateur par rapport aux positions de départ de l'indice de CCE d'au moins un bloc d'espace de recherche d'un autre dispositif d'utilisateur,

dans lequel le processeur (302) est configuré pour déterminer des positions de départ des candidats PDCCH à l'intérieur de l'au moins un bloc d'espace de recherche du dispositif d'utilisateur sur la base d'une sortie d'une première fonction de hachage, d'un premier décalage et d'une table de bits ; et le premier décalage se réfère à un décalage d'une ou plusieurs longueurs de CCE,

dans lequel des entrées de la première fonction de hachage incluent au moins l'un de l'identité du dispositif d'utilisateur et d'un indice de créneau ou de symbole.

3. Dispositif d'utilisateur selon la revendication 2, dans lequel le processeur (302) est configuré pour déterminer des positions de départ de l'au moins un bloc d'espace de recherche, et le processeur (302) est configuré pour déterminer des positions des candidats PDCCH des différents AL de CCE à l'intérieur de l'au moins un bloc d'espace de recherche.

4. Dispositif d'utilisateur selon la revendication 2, dans lequel la première fonction de hachage est utilisée en conjonction avec un deuxième décalage.

5. Dispositif d'utilisateur selon la revendication 2, dans lequel le processeur (302) est configuré pour déterminer des positions de départ de l'au moins un bloc d'espace de recherche au moyen d'au moins l'un d'une sortie de la seconde fonction de hachage, d'un troisième décalage et d'une configuration de table de bits du dispositif d'utilisateur.

6. Dispositif d'utilisateur selon la revendication 2, dans lequel les blocs d'espace de recherche sont situés de façon contiguë dans le temps d'une région de commande.

7. Dispositif d'utilisateur selon la revendication 2, dans lequel les blocs d'espace de recherche sont situés de façon contiguë dans la fréquence d'une région de commande, et/ou les blocs d'espace de recherche sont répartis dans le temps d'une région de commande.

8. Dispositif d'utilisateur selon la revendication 2, dans lequel les blocs d'espace de recherche sont répartis dans la fréquence d'une région de commande, et/ou les blocs d'espace de recherche présentent des tailles différentes.

9. Dispositif d'utilisateur selon la revendication 2, dans lequel un nombre de candidats PDCCH de chaque AL de CCE dans un bloc d'espace de recherche sont configurés.

**10.** Dispositif d'utilisateur selon la revendication 2, dans lequel le processeur (302) est configuré pour mapper les CCE des candidats PDCCH sur la fréquence de manière répartie.

**11.** Dispositif d'utilisateur selon la revendication 2, dans lequel le processeur (302) est configuré pour mapper les CCE des candidats PDCCH dans le temps de manière contiguë.

**12.** Dispositif d'utilisateur selon la revendication 2, dans lequel les CCE comprennent une pluralité de groupes d'éléments de ressource, REG, dans lequel le CCE est une unité de mappage des candidats PDCCH, et le processeur (302) est configuré pour mapper les REG sur des ressources contiguës.

<u>100</u>

| processor | transceiver |
|-----------|-------------|
| <u>102</u> | <u>104</u> |

PUSCH

106

500

## FIG. 1

200

202 — Allocating CCEs on a PDCCH having PDCCH candidates defined for different CCE ALs

204 — Transmitting the PDCCH on allocated CCEs in the at least one search space block to the user device, wherein a number of CCEs is defined by the different CCE ALs. The CCEs are allocated to a user device. Forming at least one search space block containing the CCEs of different CCE Als. The at least one search space block is in a nested structure to carry PDCCH candidates with the different CCE ALs.

## FIG. 2

<u>300</u>

| processor | transceiver |
|-----------|-------------|
| <u>302</u> | <u>304</u> |

PUSCH

306

500

## FIG. 3

Search space of a user device

CCE

REG

frequency

# FIG. 4

Search space of a UE

CCE

REG

frequency

# FIG. 5

CCE AL =8
CCE AL =4
CCE AL =2
CCE AL =1

PDCCH
candidates

frequency

# FIG. 6

frequency

OFDM symbol #1
OFDM symbol #2
OFDM symbol #3

Search space block for a UE

# FIG. 7

UE#1 PDCCH search space block

UE#2 PDCCH search space block

CCE AL =8
CCE AL =4
CCE AL =2
CCE AL =1
PDCCH candidates

frequency

## FIG. 8

UE#1 PDCCH search space block

UE#2 PDCCH search space block (shifted by 2 CCE)

UE#2 PDCCH search space block (shifted by 4 CCE)

CCE AL =8
CCE AL =4
CCE AL =2
CCE AL =1
PDCCH candidates

2 CCE

4 CCE

frequency

## FIG. 9

☐ CCE AL =8
▨ CCE AL =4
▨ CCE AL =2
▤ CCE AL =1
PDCCH candidates

frequency

## FIG. 10

FIG. 11

Search space block with 4 CCEs   Search space block with 8 CCEs

CCE AL = 8
CCE AL = 4
CCE AL = 2
CCE AL = 1

frequency

FIG. 12

Starting of a search space block

Size of search space block Lmax

Overall set of resources of the search space in logical domain

frequency

} Search space block of a UE

FIG. 13

FIG. 14

FIG. 15

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUAWEI et al.** Nested structure for search space design. *R1-1701639,* 12 February 2017

- **MITSUBISHI ELECTRIC.** On DL control channel design. *R1-1700305,* 16 January 2017